# EUROPEAN PATENT SPECIFICATION

(11) **EP 2 589 501 B1**
(45) Date of publication and mention of the grant of the patent: **20.08.2014**
(21) Application number: 11188056.3
(22) Date of filing: 07.11.2011
(51) Int. Cl.: B60B 19/00

(54) **Solid wheel**
Monoblockrad
Roue solide

(43) Date of publication of application: 08.05.2013
(73) Proprietor: Dijiya Energy Saving Technology Inc., Banqiao City Taipei County 22043 (TW)
(72) Inventor: Huang, Wen-Hung, 22043 New Taipei City (TW)
(74) Representative: Becker Kurig Straus

(56) References cited:
- EP-A1- 1 097 734
- US-A- 4 387 070
- US-A- 4 879 794
- US-A1- 2003 209 938

## Description

### Technical Field

The present invention relates to a wheel, and more particularly, to a solid wheel capable of preventing the detachment of a wheel rim from a rubber tire so as to prolong the lifetime of the wheel and ensure the driving safety.

### Background

Recently, most large vehicles utilize inflatable rubber tires in order to obtain shockproof effect. As for the manually operated flat cars, these cars usually utilize integrated solid rubber tires because their driving speed is usually lower.

The closest prior art document US 2003/209938 A1 discloses a stroller wheel structure including a wheel frame and a stroller wheel coaxially mounted thereto. The wheel frame includes a hub body for rotatably mounting to a stroller and a ring shaped rim body, which is coaxially mounted to the hub body, having a first side, an opposed second side, and a plurality of transverse through slots spacedly provided on the rim body to communicate the first side with the second side. The stroller wheel includes a solid core wheel body having a ring shaped coaxially mounted on the rim body, two spaced apart sidewalls radially extended from inner circumferential edges of the wheel body to cover the first and second sides of the rim body respectively, and a plurality of reinforcing ribs integrally extended between the sidewalls through the transverse through slots of the rim body respectively, so as to substantially mount the stroller wheel around the wheel frame.

For these rubber tires, a key-seating structure is usually adopted in order to connect a solid rubber tire to a wheel rim's external periphery. However, this structure usually has poor structural property, so that the rubber tire may be easily detached from the wheel rim when the wheel is subject to a lateral force. Especially, for electric flat cars that are driven by electricity and have high driving speed, the tires will inevitably bear more force because of the high driving speed. Moreover, the heat produced as a result of the friction between the rubber tires and the ground will soften the rubber tires. Thereby, the rubber tires will even more easily be detached from the wheel rim so as to shorten the lifetime of the wheel.

In order to overcome above shortcomings, inventor had the motive to study and develop the present invention. After hard research and development, the inventor provides a solid wheel so as to stabilize the structure and prolong the lifetime of the wheel, and ensure the driving safety for users.

### Summary of the disclosure

An object of the present invention is to provide a solid wheel, where the connection part of a wheel rim and a rubber tire is processed to have elongate holes uniformly and peripherally arranged. Thereby, the wheel rim and the rubber tire can be firmly connected with each other so as to prolong the lifetime of the wheel and ensure the driving safety for the users.

Another object of the present invention is to provide a solid wheel, where two sides of the wheel rim's external ring are processed to be in dentate shape. Thereby, the connecting strength between the rubber tire and the wheel rim will be uniform around the peripheries of the wheel rim, and consequently the wheel rim and the rubber tire can be firmly connected with each other even when the wheel is at high rotation speed.

Another object of the present invention is to provide a solid wheel, where the external ring's external periphery is formed to be a cambered surface so as to render uniform the thickness of the rubber tire attached onto the wheel rim. Thereby, the car will not become shaking when the radial thickness of the rubber tires decreased.

Another object of the present invention is to provide a solid wheel, where the external ring's external periphery is sprayed with a layer of emery to form a coarse surface. Thereby, the rubber tire can be firmly connected with the external ring and is difficult to be detached therefrom.

Another object of the present invention is to provide a solid wheel, where the rubber tire and the wheel rim are formed integratedly and the wheel rim is used as a motor's rotor. Thereby, the wheel can be used as a driving wheel. Besides, the wheel rim and the rubber tire can be firmly connected with each other even at a high rotation speed.

In order to achieve above objects, the present invention provides a solid wheel comprising a wheel rim and a rubber tire. The wheel rim includes a left lateral surface and a right lateral surface and between the left and right lateral surfaces formed an external ring and an internal ring. The internal ring's external periphery is provided circularly with a plurality of axially-extended positioning blocks. A positioning groove that passes axially through the wheel rim is formed between any two positioning blocks, the internal ring's external periphery, and the external ring's internal periphery. The external ring's axial width is shorter than the internal ring's axial width. Any one of the external ring's left and right lateral sides is provided with a plurality of recesses. The rubber tire is integratedly formed on the wheel rim's external periphery, so as to have the rubber tire's internal periphery engaged correspondingly with the external and internal rings.

During implementation, the internal ring's external periphery is provided circularly with a plurality of support blocks. Each support block is located between two positioning blocks, the internal ring's external periphery, and the external ring's internal periphery. Besides, the support block's axial width is shorter than the wheel rim's axial width.

During implementation, the left and right lateral sides of the external ring are respectively provided with a plurality of recesses each of which has an opening, and the recesses on the left or the right lateral surface are arranged in a form of circular array.

During implementation, the external periphery of the external ring is a cambered surface having a center higher than left and right sides next to the center.

During implementation, the external periphery of the external ring is sprayed with a layer of emery to form a coarse surface.

During implementation, the wheel rim is made by magnetic steel and is used as the rotor of a motor.

During implementation, the wheel rim is fitted on the rotor of a motor.

The following detailed description, given by way of examples or embodiments, will best be understood in conjunction with the accompanying drawings.

### Brief Description of the Drawings

Fig. 1 is a perspective view of a preferred embodiment of the present invention.
Fig 2 is a perspective view of a wheel rim in the preferred embodiment of the present invention.
Fig. 3 is a lateral view of the wheel rim of the preferred embodiment of the present invention.
Fig. 4 is a front view of the wheel rim of the preferred embodiment of the present invention.
Fig. 5 is a lateral view of the preferred embodiment of the present invention showing that the wheel rim is fitted on the rotor of a motor.

### Detailed Description

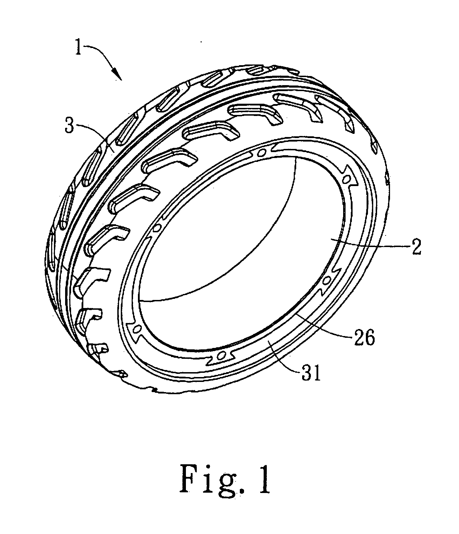

Please refer to Fig.1, which shows a preferred embodiment of a solid wheel 1 comprising a wheel rim 2 and a rubber tire 3 according to the present invention. The axial direction used hereinafter is defined as the axial direction of the wheel rim 2, while the radial direction used hereinafter is defined as the direction from the axle center of the wheel rim extending radially outwards.

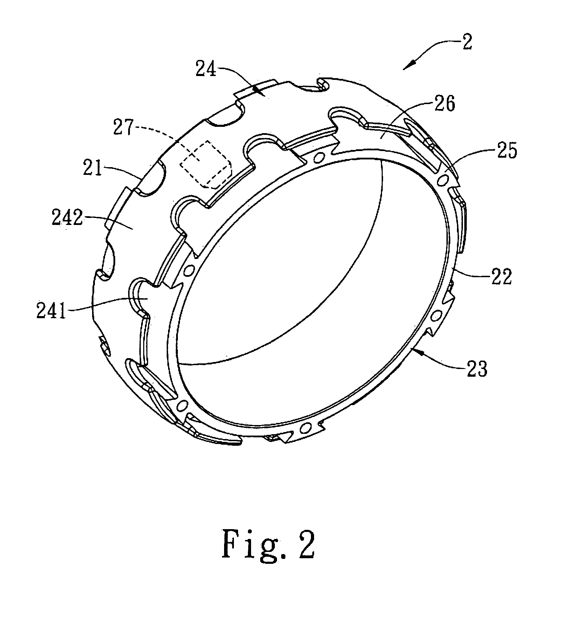

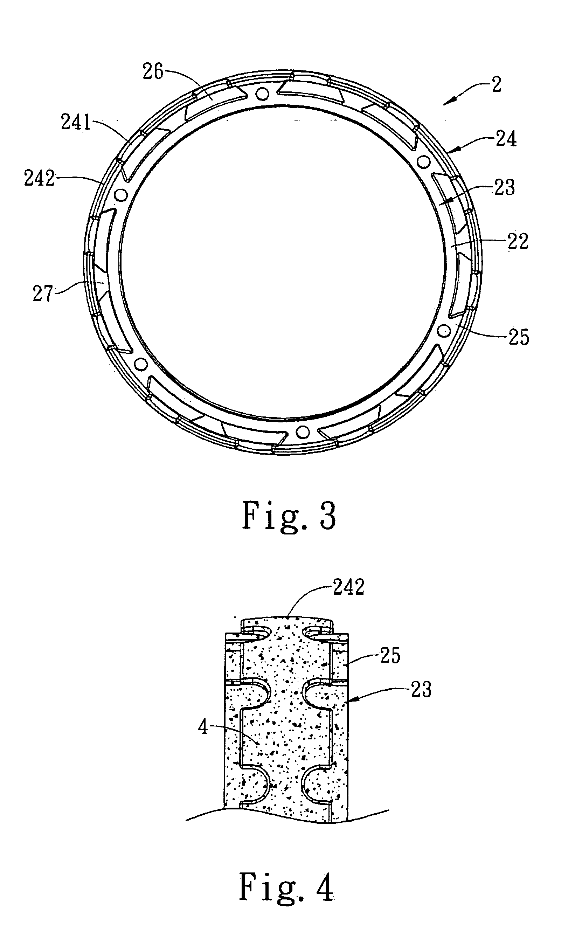

Please refer to Figs.2 and 3. The rubber tire 2 includes a left lateral surface 21 and a right lateral surface 22 opposite to the left lateral surface 21. Moreover, between the left and right lateral surfaces 21, 22 are formed an internal ring 23 and an external ring 24.

The external periphery of the internal ring 23 is provided with a plurality of positioning blocks 25 that are arranged circularly and equidistantly around the internal ring 23 and are in strip shape. The positioning blocks 25 are extended axially and the cross-section of each positioning block 25 is in dovetail shape. By the arrangement of the plurality of the positioning blocks 25, a positioning groove 26 that passes axially through the wheel rim 2 is formed between any two adjacent positioning blocks 25, the external periphery of the internal ring 23, and the internal periphery of the external ring 24. In other words, the left end of the positioning groove 26 is in communication with the left lateral side 21 of the wheel rim 2 while the right end of the positioning groove 26 is in communication with the right lateral side 22 of the wheel rim 2.

The external ring 24 is arranged outside the internal ring 23 and the axial width of the external ring 24 is shorter than the axial width of the internal ring 23. Besides, the left and right lateral sides are respectively provided with a plurality of recesses 241 each of which has an opening. The recesses 241 on the left and right lateral sides are respectively arranged in a form of circular array, so as to make the left and right lateral sides of the external ring 24 to be in dentate shape. In practice, the plurality of recesses 241 also can be formed only on one of the left lateral side and right lateral side. As shown in Fig.4, the external periphery of the external ring 24 is a cambered surface 242, where its center is higher than its left and right sides next to the center. Besides, the cambered surface 242, the external periphery of the internal ring 23, and the external periphery of each positioning block 25 are respectively sprayed with a layer of emery 4 to form coarse surfaces.

Moreover, the external periphery of the internal ring 23 is provided circularly with a plurality of support blocks 27. Each support block 27 is located between two positioning blocks 25, the external periphery of the internal ring 23, and the internal periphery of the external ring 24. In other words, the support block is formed in the positioning groove 26. Besides, the axial width of the support block 27 is shorter than the axial width of the wheel rim 2. In practice, the support block 27 is preferably in strip shape and the cross-section of the support block 27 is dovetail shape.

The rubber tire 3 is formed on the external periphery of the wheel rim 2 by an injection molding process. The internal periphery of the rubber tire 3 passes through the positioning grooves 26 so as to form a plurality of dovetail-shape protrusions 31 corresponding to the positioning grooves 26. Besides, the internal periphery of the rubber tire 3 covers the external ring 24 and the internal ring 23. Because the axial width of the support block 27 is shorter than the axial width of the wheel rim 2, the rubber tire can cover the plurality of the support blocks 27 entirely after being formed by the injection molding process. Thereby, the solid wheel according to the present invention can be used as a driving wheel.

In this way, the rubber tire 3 or the wheel rim 2 will not slide axially towards the left or right side when being subject to a force coming from the left lateral surface 21 or from the right lateral surface 22 of the wheel rim 2. Moreover, by means of the arrangement of the plurality of the positioning grooves 26 and the plurality of the support blocks 27 all of which have dovetail cross-sections, it is able to form a connection force along the radial direction between the rubber tire 3 and the wheel rim 2, and consequently the rubber tire 3 can be firmly connected with the wheel rim 2 without being departed from each other.

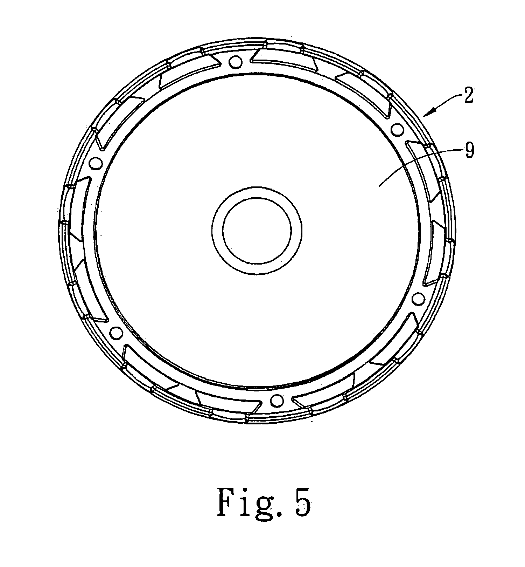

As shown in Fig.5, the wheel rim 2 can be made by magnetic steel and be used as the rotor of a motor 9. Alternatively, the wheel rim 2 also can be directly fitted on the rotor of a motor 9 for being used as a driving wheel, so as to drive the wheels of a vehicle (such as electric flat cars).

Therefore, the present invention has following advantages:
1. According to the present invention, the connection part of the wheel rim and the rubber tire is processed to have a plurality of elongate holes that are arranged uniformly at the periphery of the wheel rim. Thereby, the wheel rim and the rubber tire can be firmly connected with each other.
2. According to the present invention, two sides of the wheel rim's external ring are processed to be in dentate shape. Thereby, the connecting strength between the rubber tire and the wheel rim will be uniform around the peripheries of the wheel rim, so that the wheel rim and the rubber tire can be firmly connected with each other even when the wheel is at high rotation speed.
3. According to the present invention, the external ring's external periphery is formed to be a cambered surface so as to render uniform the thickness of the rubber tire attached onto the wheel rim. Thereby, the car will not become shaking even when half the original radial thickness of the rubber tires is worn out as a result of attrition.
4. According to the present invention, the external periphery of the external ring, the external periphery of the internal ring, and the external periphery of each positioning block are respectively sprayed with a layer of emery. Thereby, the formed rubber tire can be firmly connected to the external ring and is difficult to be detached therefrom.
5. According to the present invention, the wheel rim can be directly used as a rotor for a motor or can be directly fitted onto the rotor of the motor. Thereby, the wheel can be used as a driving wheel.

As disclosed in above descriptions and attached drawings, the present invention can achieve desired objectives to provide a solid wheel, which has stable structure and longer lifetime and is able to provide drivers with safety. It is new and can be put into industrial use.

## Claims

1. A solid wheel (1), comprising:
a wheel rim (2), including a left lateral surface and a right lateral surface opposite to the left lateral surface;
between the left and right lateral surfaces formed an external ring (24) and an internal ring (23), where the internal ring's (23) external periphery is provided circularly with a plurality of axially-extended positioning blocks; and
a positioning groove that passes axially through the wheel rim (2) is formed between any two positioning blocks, the internal ring's (23) external periphery, and the external ring's (24) internal periphery; wherein
the external ring's (24) axial width is shorter than the internal ring's (23) axial width; the solid wheel (1) being **characterized in that** any one of the external ring's (24) left and right lateral sides is provided with a plurality of recesses; and in further comprising
a rubber tire (3), integratedly formed on the wheel rim's (2) external periphery.

2. The solid wheel (1) as claimed in claim 1, wherein the internal ring's (23) external periphery is provided circularly with a plurality of support blocks; each support block is located between two positioning blocks, internal ring's (23) external periphery, and the external ring's (24) internal periphery, and the support block's axial width is shorter than the wheel rim's (2) axial width.

3. The solid wheel (1) as claimed in claim 2, wherein the left and right lateral sides of the external ring (24) are respectively provided with a plurality of recesses each of which has an opening, and the recesses on the left or the right lateral surface are arranged in a form of circular array.

4. The solid wheel (1) as claimed in claim1 or 3, wherein the external periphery of the external ring (24) is a cambered surface having a center higher than left and right sides next to the center.

5. The solid wheel (1) as claimed in claim 4, wherein the positioning blocks are in strip shape and the cross-section of each positioning block is in dovetail shape.

6. The solid wheel (1) as claimed in claim 4, wherein the support blocks are in strip shape and the cross-section of each support block is in dovetail shape.

7. The solid wheel (1) as claimed in claim1 or 3, wherein the wheel rim (2) is made by magnetic steel and is used as a motor's rotor.

8. The solid wheel (1) as claimed in claim 1 or 3, wherein the wheel rim (2) is fitted on a motor's rotor.

9. The solid wheel (1) as claimed in claim1 or 3, wherein the external periphery of the external ring (24) is sprayed with a layer of emery to form a coarse surface.

10. The solid wheel (1) as claimed in claim 1 or 3, wherein the external periphery of the internal ring (23) is sprayed with a layer of emery to form a coarse surface.

11. The solid wheel (1) as claimed in claim 1 or 3, wherein the external periphery of each positioning block is sprayed with a layer of emery to form a coarse surface.

## Patentansprüche

1. Massivrad (1), umfassend:
eine Radfelge (2), einschließlich einer linken Seitenfläche und einer rechten Seitenfläche, die der linken Seitenfläche gegenüberliegt;
einen Außenring (24) und einen Innenring (23), die zwischen der linken und der rechten Seitenfläche gebildet sind, wobei der Außenrand des Innenrings (23) kreisförmig mit einer Vielzahl von sich in Achsrichtung erstreckenden Positionierblöcken ausgestattet ist; und
eine Positioniernut, die in Achsrichtung durch die Radfelge (2) hindurchgeht und zwischen jedweden zwei Positionierblocks, dem Außenrand des Innenrings (23) und dem Innenrand des Außenrings (24) gebildet ist; wobei
die Breite des Außenrings (24) in Achsrichtung kürzer ist als die Breite des Innenrings (23) in Achsrichtung, wobei das Massivrad (1) **dadurch gekennzeichnet ist, dass** jede der linken und rechten Seitenflächen des Außenrings (24) mit einer Vielzahl von Aussparungen ausgestattet ist, und dadurch, dass sie weiterhin umfasst
einen Gummireifen (3), der integriert an dem Außenrand der Radfelge (2) gebildet ist.

2. Massivrad (1) gemäß Anspruch 1, wobei der Außenrand des Innenrings (23) kreisförmig mit einer Vielzahl von Stützblöcken ausgestattet ist; wobei sich jeder Stützblock zwischen zwei Positionierblöcken, dem Außenrand des Innenrings (23) und dem Innenrand des Außenrings (24) befindet und wobei die Breite des Stützblocks in Achsrichtung kürzer ist als die Breite der Radfelge (2) in Achsrichtung.

3. Massivrad (1) gemäß Anspruch 2, wobei die linke und rechte seitliche Seite des Außenrings (24) jeweils mit einer Vielzahl von Aussparungen ausgestattet sind, wobei jede ein Öffnung aufweist und die Aussparungen an der linken oder rechten Seitenfläche in Form einer kreisförmigen Anordnung angeordnet sind.

4. Massivrad (1) gemäß Anspruch 1 oder 3, wobei der Außenrand des Außenrings (24) eine gewölbte Fläche mit einem Zentrum ist, das höher ist, als die Seiten links und rechts von dem Zentrum.

5. Massivrad (1) gemäß Anspruch 4, wobei die Positionierblöcke in streifenform vorliegen und der Querschnitt jedes Positionierblocks eine Zinkenform aufweist.

6. Massivrad (1) gemäß Anspruch 4, wobei die Stützblöcke in streifenform vorliegen und der Querschnitt jedes Stützblocks eine Zinkenform aufweist.

7. Massivrad (1) gemäß Anspruch 1 oder 3, wobei die Radfelge (2) aus magnetischem Stahl gefertigt ist und als ein Rotor eines Motors verwendet wird.

8. Massivrad (1) gemäß Anspruch 1 oder 3, wobei die Radfelge (2) an einem Rotor eines Motors eingepasst ist.

9. Massivrad (1) gemäß Anspruch 1 oder 3, wobei der Außenrand des Außenrings (24) mit einer Schicht Schmirgel besprüht ist, um eine raue Fläche zu bilden.

10. Massivrad (1) gemäß Anspruch 1 oder 3, wobei der Außenrand des Innenrings (23) mit einer Schicht Schmirgel besprüht ist, um eine raue Fläche zu bilden.

11. Massivrad (1) gemäß Anspruch 1 oder 3, wobei der Außenrand jedes Positionierblocks mit einer Schicht Schmirgel besprüht ist, um eine raue Fläche zu bilden.

## Revendications

1. Roue solide (1), comprenant :
une jante de roue (2), incluant une surface latérale gauche et une surface latérale droite opposée à la surface latérale gauche ;
entre les surfaces latérales gauche et droite est formé un anneau externe (24) et un anneau interne (23), où la périphérie externe de l'anneau interne (23) est fournie de façon circulaire avec une pluralité de blocs de positionnement s'étendant axialement ; et
une rainure de positionnement qui passe axialement au travers de la jante de roue (2) est formée entre deux blocs de positionnement quelconques, la périphérie externe de l'anneau interne (23), et la périphérie interne de l'anneau externe (24) ; dans laquelle
la largeur axiale de l'anneau externe (24) est plus courte que la largeur axiale de l'anneau interne (23) ; la roue solide (1) étant **caractérisée en ce que** l'un quelconque des côtés latéraux gauche et droit de l'anneau externe (24) est fourni avec une pluralité de renfoncements ; et **en ce qu'**elle comprend en outre
un pneu en caoutchouc (3), formé de façon intégrée sur la périphérie externe de la jante de roue (2).

2. Roue solide (1) telle que revendiquée à la revendication 1, dans laquelle la périphérie externe de l'anneau interne (23) est fournie de façon circulaire avec une pluralité de blocs de soutien ; chaque bloc de soutien est situé entre deux blocs de positionnement, la périphérie externe de l'anneau interne (23), et la périphérie interne de l'anneau externe (24), et la largeur axiale du bloc de soutien est plus courte que la largeur axiale de la jante de roue (2).

3. Roue solide (1) telle que revendiquée à la revendication 2, dans laquelle les côtés latéraux gauche et droit de l'anneau externe (24) sont fournis respectivement avec une pluralité de renfoncements, chacun desquels possédant une ouverture, et les renfoncements sur la surface latérale gauche ou droite sont agencés dans une forme de réseau circulaire.

4. Roue solide (1) telle que revendiquée à la revendication 1 ou à la revendication 3, dans laquelle la périphérie externe de l'anneau externe (24) est une surface cambrée possédant un centre plus élevé que les côtés gauche et droit à côté du centre.

5. Roue solide (1) telle que revendiquée à la revendication 4, dans laquelle les blocs de positionnement sont en forme de bande et la section transversale de chaque bloc de positionnement est en forme de queue d'aronde.

6. Roue solide (1) telle que revendiquée à la revendication 4, dans laquelle les blocs de soutien sont en forme de bande et la section transversale pour chaque bloc de soutien est en forme de queue d'aronde.

7. Roue solide (1) telle que revendiquée à la revendication 1 ou à la revendication 3, dans laquelle la jante de roue (2) est fabriquée en acier magnétique et est utilisée comme un rotor de moteur.

8. Roue solide (1) telle que revendiquée à la revendication 1 ou à la revendication 3, dans laquelle la jante de roue (2) est ajustée sur un rotor de moteur.

9. Roue solide (1) telle que revendiquée à la revendication 1 ou à la revendication 3, dans laquelle la périphérie externe de l'anneau externe (24) est vaporisée avec une couche d'émeri pour former une surface rugueuse.

10. Roue solide (1) telle que revendiquée à la revendication 1 ou à la revendication 3, dans laquelle la périphérie externe de l'anneau interne (23) est vaporisée avec une couche d'émeri pour former une surface rugueuse.

11. Roue solide (1) telle que revendiquée à la revendication 1 ou à la revendication 3, dans laquelle la périphérie externe de chaque bloc de positionnement est vaporisée avec une couche d'émeri pour former une surface rugueuse.
